# EUROPÄISCHE PATENTANMELDUNG

(11) **EP 3 067 689 A1**
(43) Veröffentlichungstag der Anmeldung: **14.09.2016**
(21) Anmeldenummer: 16156493.5
(22) Anmeldetag: 19.02.2016
(51) Int. Cl.: G01N 27/90, G01N 29/04, G01N 29/06, G01N 29/22, G01N 29/265

(54) **PRÜFUNGSVORRICHTUNG UND VERFAHREN ZUR ZERSTÖRUNGSFREIEN PRÜFUNG EINES BAUTEILS MITTELS EINER OLED FOLIE**

(30) Priorität: 10.03.2015 DE 102015204264
(71) Anmelder: Siemens Aktiengesellschaft, 80333 München (DE)
(72) Erfinder: Obermayr, Stefan, 47199 Duisburg (DE)

(57) **Zusammenfassung**

Die Erfindung betrifft eine Prüfungsvorrichtung (1) zur zerstörungsfreien Prüfung eines Bauteils (2), umfassend einen Prüfkopf (3) zur Erzeugung eines Abtastsignals und zur Detektion eines Messsignals, wobei mittels des Messsignals Informationen bezüglich der Qualität des Bauteils (2), insbesondere über Fehler, wie Risse oder dergleichen, zu ermitteln sind, dadurch gekennzeichnet, dass weiterhin eine OLED Folie (4) vorgesehen ist, die während der Prüfung auf einer zu prüfenden Oberfläche des Bauteils (2) anzuordnen ist und dass:
a) die OLED Folie (4) eine Detektionsschicht zur Erfassung von Positionskoordinaten umfasst, oder
b) die OLED Folie (4) ausgebildet ist, um die vom Prüfkopf (3) detektierten Messsignale auf der OLED Folie (4) darzustellen, oder
c) die OLED Folie (4) eine Detektionsschicht zur Erfassung von Positionskoordinaten umfasst und ausgebildet ist, um die vom Prüfkopf (3) detektierten Messsignale in Abhängigkeit von den mittels der OLED Folie (4) detektierten Positionskoordinaten auf der OLED Folie (4) darzustellen.

## Beschreibung

Die Erfindung betrifft eine Prüfungsvorrichtung zur zerstörungsfreien Prüfung eines Bauteils umfassend einen Prüfkopf zur Erzeugung eines Abtastsignals und zur Detektion eines Messsignals, wobei mittels des Messsignals Informationen bezüglich der Qualität des Bauteils, insbesondere über Fehler, wie Risse oder dergleichen zu ermitteln sind.

Ferner betrifft die Erfindung ein Verfahren zur zerstörungsfreien Prüfung eines Bauteils mittels einer Prüfungsvorrichtung, umfassend die Schritte:
- ein Prüfkopf wird relativ zu einem zu prüfenden Bauteil positioniert,
- mittels des Prüfkopfes werden Abtastsignale in dem Bauteil erzeugt,
- während der Erzeugung von Abtastsignalen werden Messsignale erfasst, über welche Informationen über die Qualität des Bauteils, insbesondere über die Position und/oder Größe von Fehlern, wie Rissen oder dergleichen, in Abhängigkeit der erzeugten Abtastsignale erhalten werden,
- die erfassten Messsignale werden ausgewertet und auf einem Ausgabegerät optisch dargestellt, um die Informationen über die Qualität des Bauteils zu erhalten.

Um Bauteile auf das Vorhandensein von Fehlern, wie Risse, Hohlräume oder der gleichen zerstörungsfrei zu untersuchen und die Größe vorhandener Fehler abzuschätzen bzw. zu bestimmen sind diverse Verfahren aus dem Stand der Technik bekannt. Beispielsweise findet die Ultraschallprüfung zur Volumenprüfung und die Wirbelstromprüfung zur Oberflächenprüfung Anwendung.

Bei der Wirbelstromprüfung wird eine Wirbelstromsonde als Prüfkopf verwendet, und diese wird entlang der Oberfläche eines zu prüfenden Bauteils verfahren. Mittels einer in der Wirbelstromsonde vorgesehenen Spule, die als Erregerspule dient, wird ein magnetisches Wechselfeld erzeugt, welches in dem zu prüfenden Teil des Bauteils Wirbelströmen hervorruft. Die Wirbelströme erzeugen ihrerseits ein sekundäres magnetisches Wechselfeld, welches in einer Detektionsspule eine Spannung induziert, deren Amplitude und Phase im Zusammenhang mit den elektrischen Eigenschaften des zu prüfenden Bauteils steht. Fehler im Material des Bauteils haben einen charakteristischen Einfluss auf das induzierte sekundäre magnetische Wechselfeld und somit auf die in der Detektionsspule induzierte Spannung. Die Detektionsspule kann prinzipiell ein zu der Erregerspule separates Bauteil sein oder die Erregerspule selbst übernimmt die Funktion der Detektionsspule.

Bei der Ultraschallprüfung wird eine Ultraschallsonde als Prüfkopf verwendet. Diese weist beispielsweise ein piezoelektrisches Material, z. B. einen Quarzkristall, auf. Durch Anlegen einer elektrischen Spannung an den Quarzkristall wird dieser deformiert. Wird die Ultraschallsonde über die Oberfläche eines zu prüfenden Bauteils bewegt, so werden infolge der wirkenden elektrischen und mechanischen Kräfte Ultraschallwellen geniert, die ausgehend von der Bauteiloberfläche propagieren. Die erzeugten Ultraschallwellen werden an Fehlern in dem Bauteil gebeugt. Von einem geeigneten Detektor wird das gebeugte Ultraschallsignal erfasst und ausgewertet, um die Position und Größe von den Fehlern im Bauteil zu bestimmen. Der geeignete Detektor kann durch den Quarzkristall selber gegeben sein, sodass dieser gleichzeitig als Erreger und Detektor für die Ultraschallwellen dient.
Bei beiden Verfahren werden die erfassten Messsignale ausgewertet und mittels eines Ausgabegerätes optisch dargestellt. Zusätzlich zum Führen des Prüfkopfes über das Bauteil ist es bei beiden Verfahren erforderlich, gleichzeitig das detektierte Messsignal auf dem Ausgabegerät zu beobachten. Hierdurch wird die exakte Führung des Prüfkopfes, insbesondere das Einhalten des Spurversatzes, erschwert. Beispielsweise kann die Anforderung darin bestehen, den Prüfkopf mäanderförmig mit einem festgelegten Spurversatz über das Bauteil zu bewegen.

Die aus dem Stand der Technik bekannten Vorrichtungen und Verfahren zur zerstörungsfreien Prüfung von Bauteilen haben sich bewährt. Es wird jedoch als nachteilig erachtet, dass diese Vorrichtung und das Verfahren eine exakte Führung des Prüfkopfes erfordern, während der Blick vom Prüfungskopf weg auf das Ausgabegerät gerichtet wird. Dies erfordert ein hohes Maß an Erfahrung. Insbesondere bei großflächigen Bauteilen gestaltet es sich besonders schwer, sämtliche Segmente des zu prüfenden Bauteils zu erfassen.

Des Weiteren ist die Verwendung eines Wegaufnehmers möglich, um auf dem Ausgabegerät die Bereiche anzuzeigen, an denen bereits Messsignale erfasst wurden. Die Verwendung von Wegaufnehmern führt zu einem erhöhten mechanischen Aufwand und damit einhergehend zu einer erschwerten Handhabung, weshalb ihre Verwendung bei der manuellen Prüfung eher unüblich ist.

Ausgehend von dem Stand der Technik ist es eine Aufgabe der vorliegenden Erfindung, eine Vorrichtung und ein Verfahren der eingangs genannten Art anzugeben, welches bei der Prüfung eines Bauteils das Führen des Prüfkopfes und das gleichzeitige Beobachten der auf einem Ausgabegerät dargestellten Messsignale erleichtert.

Diese Aufgabe wird bei einer Prüfungsvorrichtung der eingangs genannten Art dadurch gelöst, dass weiterhin eine OLED Folie vorgesehen ist, die während der Prüfung auf einer zu prüfenden Oberfläche des Bauteils anzuordnen ist und dass:
a) die OLED Folie eine Detektionsschicht zur Erfassung von Positionskoordinaten umfasst und ausgebildet ist, um die vom Prüfkopf detektierten Messsignale in Abhängigkeit von den mittels der OLED Folie detektierten Positionskoordinaten darzustellen, oder
b) die OLED Folie ausgebildet ist, um die vom Prüfkopf detektierten Messsignale auf der OLED Folie darzustellen, oder
c) die OLED Folie eine Detektionsschicht zur Erfassung von Positionskoordinaten umfasst und ausgebildet ist, um die vom Prüfkopf detektierten Messsignale in Abhängigkeit von den mittels der OLED Folie detektierten Positionskoordinaten auf der OLED Folie darzustellen.

Weiterhin wird die Aufgabe bei einem Verfahren der eingangs genannten Art dadurch gelöst, dass die Prüfungsvorrichtung verwendet wird und während der Prüfung der Prüfkopf über die OLED Folie geführt wird, wobei:
a) mittels der OLED Folie die Positionskoordinaten des Prüfkopfes erfasst werden und die vom Prüfkopf detektierten Messsignale in Abhängigkeit von den mittels der OLED Folie detektierten Positionskoordinaten angezeigt werden, oder
b) die vom Prüfkopf detektierten Messsignale auf der OLED Folie angezeigt werden, oder
c) mittels der OLED Folie die Positionskoordinaten des Prüfkopfes erfasst werden und die vom Prüfkopf detektierten Messsignale in Abhängigkeit von den mittels der OLED Folie detektierten Positionskoordinaten auf der OLED Folie angezeigt werden.

Der vorliegenden Erfindung liegt somit die Überlegung zugrunde, eine OLED Folie während der Prüfung auf dem Bauteil anzuordnen und den Prüfkopf über die OLED Folie zu führen. Dabei können vom Prüfkopf detektierten Messsignale direkt auf der OLED Folie dargestellt werden, wodurch es nicht mehr notwendig ist, zum Beobachten der Messsignale den Blick von dem Prüfkopf abzuwenden. Hierdurch wird die manuelle Prüfung deutlich vereinfacht und ein intuitiver Umgang mit der Prüfungsvorrichtung ermöglicht.

Ferner können mittels einer OLED Folie, die eine Detektionsschicht umfasst, Positionskoordinaten detektiert und die vom Prüfkopf detektierten Messsignale in Abhängigkeit von den mittels der OLED Folie detektierten Positionskoordinaten auf dem Ausgabegerät angezeigt werden. Hierdurch wird die Handhabung im Vergleich zu den im Stand der Technik verwendeten Wegaufnehmern verbessert. Im Vergleich zur mechanisierten Prüfung erfordert dieses manuelle Verfahren zur zerstörungsfreien Prüfung eines Bauteils einen deutlich geringeren mechanischen Aufwand, während die ermittelten Informationen zur Qualität des Bauteils vergleichbar sind.

Weiterhin können sowohl mittels der OLED Folie die Positionskoordinaten des Prüfkopfes erfasst werden als auch die vom Prüfkopf detektierten Messsignale in Abhängigkeit von den mittels der OLED Folie detektierten Positionskoordinaten auf der OLED Folie angezeigt werden. Hierdurch wird sowohl die Handhabung als auch das gleichzeitige Beobachten der Messsignale und Führen des Prüfkopfes erleichtert.

Gemäß einer bevorzugten Weiterbildung ist vorgesehen, dass der Prüfkopf eine Ultraschallsonde und/ oder eine Wirbelstromsonde umfasst. Hierdurch wird vorteilhaft ermöglicht, Fehler an der Oberfläche eines Bauteils und/ oder in weiter innen liegenden Bauteilbereichen zu erfassen.

In Weiterbildung der Erfindung ist vorgesehen, dass Fehler aufweisende Bereiche des Bauteils und fehlerfreie Bereiche des Bauteils auf der OLED Folie eine unterschiedliche optische Kennzeichnung aufweisen, insbesondere unterschiedlich farbig dargestellt werden. Hierdurch wird vorteilhaft ermöglicht, in einer Darstellung neben den Positionskoordinaten den Betrag der Amplitude des Messsignals mittels einer Farb- oder Grauwertkodierung darzustellen. Dabei werden die erfassten Messsignale ortsabhängig auf der OLED Folie dargestellt. Informationen bezüglich der Qualität des Bauteils, wie beispielsweise die Tiefe von Rissen, sind mittels der Farb- oder Grauwertkodierung darzustellen.

Die Erfindung sieht ferner vor, dass die vom Prüfkopf detektierten Messsignale auf der OLED Folie an den Stellen angezeigt werden, an denen sie detektiert werden. Hierdurch können die Messsignale im Verhältnis 1:1 auf der OLED Folie dargestellt werden, so dass die Größe und Position der auf der OLED Folie dargestellten Messsignale exakt mit den im Bauteil vorhandenen Fehlern oder dergleichen übereinstimmt.

Gemäß einer bevorzugten Weiterbildung ist vorgesehen, dass die Positionskoordinaten eine X- und eine Y-Koordinate aufweisen, wobei die X-Koordinate in einer Längsrichtung der OLED Folie und die Y-Koordinate senkrecht dazu verläuft. Hierdurch ist die Position der X- und Y- Achse an die Ausdehnungen der OLED Folie angepasst.

In an sich bekannter Weise kann eine Steuereinheit vorgesehen sein, die hier mit dem Prüfkopf und der OLED Folie verbunden ist, wobei mittels der Steuereinheit die detektierten Messsignale ausgewertet werden, um Informationen über die Qualität des Bauteils zu erhalten. Hierdurch wird vorteilhaft ermöglicht, die vom Prüfkopf detektierten Messsignale und die mittels der OLED Folie detektieren Positionskoordinaten an die Steuereinheit zu übertragen und dort auszuwerten. Nach der Auswertung können die Daten an die OLED Folie übermittelt werden, um sie dort optisch darzustellen.

Hinsichtlich weiterer vorteilhafter Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:

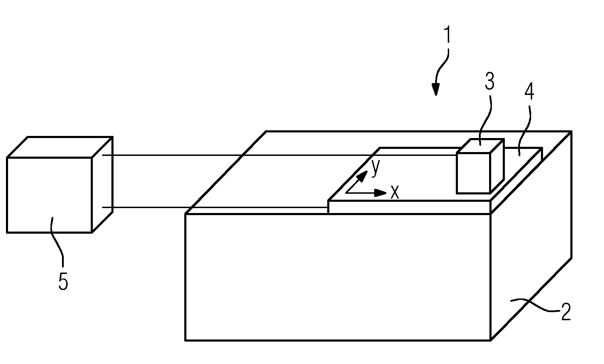

- Figur 1: eine schematische Darstellung eines zu prüfenden Bauteils und einer Prüfungsvorrichtung gemäß einer Ausführungsform der vorliegenden Erfindung.

Die Figur 1 zeigt in schematischer Darstellung eine Prüfvorrichtung 1 gemäß der vorliegenden Erfindung und ein quaderförmiges, zu prüfendes Bauteil 2. Die Prüfvorrichtung 1 umfasst einen Prüfkopf 3 und eine OLED Folie 4. Der Prüfkopf 3 kann eine Ultraschallsonde und/ oder eine Wirbelstromsonde aufweisen, wobei die Ultraschallsonde beispielsweise ein piezoelektrisches Material zur Erzeugung von Ultraschallwellen aufweist. Während die Wirbelstromsonde eine Spule zur Erzeugung eines magnetischen Wechselfelds besitzt. Mittels des Prüfkopfes 3 werden Messsignale detektiert, über welche Informationen bezüglich der Qualität des Bauteils 2, insbesondere über Fehler, wie Risse oder dergleichen ermittelt werden.

Die OLED Folie 4 umfasst eine Detektionsschicht zur Erfassung von Positionskoordinaten, die beispielsweise in Form einer drucksensitiven Folie ausgebildet ist. Mittels der Detektionsschicht wird eine X- und eine Y- Koordinate der Positionskoordinaten erfasst. Die X-Koordinate wird dabei entlang einer Längsrichtung der OLED Folie 4 ermittelt und die Y-Koordinate senkrecht dazu.

Weiterhin umfasst die Prüfungseinrichtung 1 eine Steuereinheit 5, die mit dem Prüfkopf 3 und der OLED Folie 4 verbunden ist. Die Steuereinheit 5 dient zur Auswertung des vom Prüfkopf 3 detektierten Messsignals und der von der OLED Folie 4 detektierten Positionskoordinaten.

Zur zerstörungsfreien Prüfung des Bauteils 2 wird die OLED Folie 4 auf dem zu prüfenden Bauteil 2 angeordnet, und der Prüfkopf 3 wird von Hand über die OLED Folie 4 geführt. Besonders bevorzugt wird der Prüfkopf 3 mäanderförmig mit einem festgelegten Spurversatz über die OLED Folie 4 geführt.

Mittels des Prüfkopfes 3 wird ein Abtastsignal erzeugt. Bei Verwendung einer Ultraschallsonde als Prüfkopf 3 werden mit dem Quarzkristall, Ultraschallwellen generiert, die ausgehend von der Bauteiloberfläche propagieren. Hierbei wird der Quarzkristall durch Anlegen einer elektrischen Spannung deformiert. Die erzeugten Ultraschallwellen werden an Fehlern in dem Bauteil 2 gebeugt und mittels des Quarzkristalls detektiert.

Bei der Wirbelstromprüfung wird mittels der Spule ein magnetisches Wechselfeld erzeugt. Hierdurch werden in dem zu prüfenden Teil des Bauteils 2 Wirbelströme hervorgerufen, die ihrerseits ein sekundäres magnetisches Wechselfeld erzeugen. Hierdurch wird in der Spule eine Spannung induziert, deren Amplitude und Phase im Zusammenhang mit den elektrischen Eigenschaften des zu prüfenden Bauteils 2 steht. Fehler im Material des Bauteils 2 haben einen charakteristischen Einfluss auf das induzierte sekundäre magnetische Wechselfeld und somit auf die in der Spule induzierte Spannung.

Die Positionskoordinaten des Prüfkopfes 3 werden mittels der OLED Folie 4 erfasst und die vom Prüfkopf 3 detektierten Messsignale werden in Abhängigkeit von den mittels der OLED Folie 4 detektierten Positionskoordinaten auf der OLED Folie 4 angezeigt.

Fehler aufweisende Bereiche des Bauteils 2 und fehlerfreie Bereiche des Bauteils 2 auf der OLED Folie 4 weisen eine unterschiedliche optische Kennzeichnung auf, insbesondere werden sie unterschiedlich farbig dargestellt. Durch die Verwendung einer Farb- oder Grauwertkodierung können neben der X- und Y- Koordinate der Positionskoordinaten auch die aus dem Messsignal extrahierten Informationen bezüglich der Qualität des Bauteils, beispielsweise Tiefe von Rissen, farb- oder grauwertkodiert dargestellt werden. Hierzu werden die erfassten Messsignale ortsabhängig auf der OLED Folie 4 dargestellt.

Die vom Prüfkopf 3 detektierten Messsignale werden auf der OLED Folie 4 an den jeweiligen Stellen angezeigt, an denen sie detektiert werden. Hierdurch erfolgt eine Darstellung der Messsignale auf der OLED Folie im Verhältnis 1:1. Mit anderen Worten wird die Position und Größe von Fehlern wird exakt auf der OLED Folie 4 angezeigt. Hierbei werden die fehleraufweisende Bereiche und fehlerfreie Bereiche unterschiedlich farbig dargestellt.

Bei der Verwendung einer Ultraschallsonde wird zur akustischen Ankopplung ein Kopplungsmittel, beispielsweise Koppelgel, Wasser oder Öl, zwischen der OLED Folie 4 und dem Bauteil 2 aufgetragen.

Bei der Verwendung einer Wirbelstromsonde wird in Abhängigkeit der Dicke der OLED Folie 4 das Abtastsignal verstärkt.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Prüfungsvorrichtung (1)
zur zerstörungsfreien Prüfung eines Bauteils (2), umfassend einen Prüfkopf (3) zur Erzeugung eines Abtastsignals und zur Detektion eines Messsignals,
wobei mittels des Messsignals Informationen bezüglich der Qualität des Bauteils (2),
insbesondere über Fehler, wie Risse oder dergleichen, zu ermitteln sind,
**dadurch gekennzeichnet, dass**
weiterhin eine OLED Folie (4) vorgesehen ist,
die während der Prüfung auf einer zu prüfenden Oberfläche des Bauteils (2) anzuordnen ist und dass:
a. die OLED Folie (4) eine Detektionsschicht zur Erfassung von Positionskoordinaten umfasst und ausgebildet ist, um die vom Prüfkopf (3) detektierten Messsignale in Abhängigkeit von den mittels der OLED Folie (4) detektierten Positionskoordinaten darzustellen, oder
b. die OLED Folie (4) ausgebildet ist, um die vom Prüfkopf (3) detektierten Messsignale auf der OLED Folie (4) darzustellen, oder
c. die OLED Folie (4) eine Detektionsschicht zur Erfassung von Positionskoordinaten umfasst und ausgebildet ist, um die vom Prüfkopf (3) detektierten Messsignale in Abhängigkeit von den mittels der OLED Folie (4) detektierten Positionskoordinaten auf der OLED Folie (4) darzustellen.

2. Prüfungsvorrichtung (1) nach Anspruch 1,
**dadurch gekennzeichnet,**
**dass** der Prüfkopf (3) eine Ultraschallsonde und/ oder eine Wirbelstromsonde umfasst.

3. Prüfungsvorrichtung (1) nach einem der vorhergehenden Ansprüche,
**dadurch gekennzeichnet, dass**
Fehler aufweisende Bereiche des Bauteils (2) und fehlerfreie Bereiche des Bauteils (2) auf der OLED Folie (4) eine unterschiedliche optische Kennzeichnung aufweisen, insbesondere unterschiedlich farbig dargestellt werden.

4. Prüfungsvorrichtung (1) nach einem der vorhergehenden Ansprüche,
**dadurch gekennzeichnet, dass**
weiterhin eine Steuereinheit (5) vorgesehen ist,
die mit dem Prüfkopf (3) und der OLED Folie (4) verbunden ist,
wobei mittels der Steuereinheit (5) die detektierten Messsignale ausgewertet werden,
um Informationen über die Qualität des Bauteils (2) zu erhalten.

5. Prüfungsvorrichtung (1) nach einem der vorhergehenden Ansprüche,
**dadurch gekennzeichnet, dass**
die Positionskoordinaten eine X- und eine Y-Koordinate aufweisen,
wobei die X-Koordinate in einer Längsrichtung der OLED Folie (4) und die Y-Koordinate senkrecht dazu verläuft.

6. Verfahren
zur zerstörungsfreien Prüfung eines Bauteils (2) mittels einer Prüfungsvorrichtung (1),
umfassend die Schritte:
- ein Prüfkopf (3) wird relativ zu einem zu prüfenden Bauteil (1) positioniert,
- mittels des Prüfkopfes (3) werden Abtastsignale in dem Bauteil (2) erzeugt,
- während der Erzeugung von Abtastsignalen werden Messsignale erfasst, über welche Informationen über die Qualität des Bauteils (1), insbesondere über die Position und/oder Größe von Fehlern, wie Rissen oder dergleichen, in Abhängigkeit der erzeugten Abtastsignale erhalten werden,
- die erfassten Messsignale werden ausgewertet und auf einem Ausgabegerät optisch dargestellt, um die Informationen über die Qualität des Bauteils (1) zu erhalten, **dadurch gekennzeichnet, dass**
eine Prüfungsvorrichtung (1) nach Anspruch 1 verwendet wird und
während der Prüfung der Prüfkopf (3) über die OLED Folie (4) geführt wird, wobei:
a) mittels der OLED Folie (4) die Positionskoordinaten des Prüfkopfes (3) erfasst werden und die vom Prüfkopf (3) detektierten Messsignale in Abhängigkeit von den mittels der OLED Folie (4) detektierten Positionskoordinaten angezeigt werden, oder
b) die vom Prüfkopf (3) detektierten Messsignale auf der OLED Folie (4) angezeigt werden, oder
c) mittels der OLED Folie (4) die Positionskoordinaten des Prüfkopfes (3) erfasst werden und die vom Prüfkopf (3) detektierten Messsignale in Abhängigkeit von den mittels der OLED Folie (4) detektierten Positionskoordinaten auf der OLED Folie (4) angezeigt werden.

7. Verfahren nach Anspruch 6,
**dadurch gekennzeichnet, dass**
Fehler aufweisende Bereiche des Bauteils (2) und fehlerfreie Bereiche des Bauteils (2) auf der OLED Folie (4) unterschiedlich optisch gekennzeichnet werden, insbesondere unterschiedlich farbig dargestellt werden.

8. Verfahren nach Anspruch 6 oder 7,
**dadurch gekennzeichnet, dass**
eine X- und eine Y-Koordinate der Positionskoordinaten detektiert wird,
wobei die X-Koordinate in einer Längsrichtung der OLED Folie (4) und die Y-Koordinate senkrecht dazu verläuft.

9. Verfahren nach Anspruch 6, 7 oder 8,
**dadurch gekennzeichnet, dass**
die vom Prüfkopf (3) detektierten Messsignale auf der OLED Folie (4) an den Stellen angezeigt werden, an denen sie detektiert werden.

10. Verwendung einer OLED Folie (4)
bei der zerstörungsfreien Prüfung eines Bauteils (2).

11. Verwendung einer OLED Folie (4) nach Anspruch 10,
**dadurch gekennzeichnet, dass**
die OLED Folie (4) eine Detektionsschicht zur Erfassung von Positionskoordinaten umfasst.
